Europäisches Patentamt

(19) European Patent Office

Office européen des brevets

(11) Numéro de publication : **0 305 412 B1**

(12) # FASCICULE DE BREVET EUROPEEN

(45) Date de publication du fascicule du brevet :
08.05.91 Bulletin 91/19

(21) Numéro de dépôt : **88900444.6**

(22) Date de dépôt : **21.12.87**

(86) Numéro de dépôt international :
**PCT/BE87/00020**

(87) Numéro de publication internationale :
**WO 88/05763 11.08.88 Gazette 88/18**

(51) Int. Cl.⁵ : **C02F 1/48**, A61L 2/02,
**C23F 15/00**

(54) # TRAITEMENT DE LIQUIDES ET DE TISSUS BIOLOGIQUES PAR INDUCTION MAGNETIQUE.

(30) Priorité : **28.01.87 BE 8700056**

(43) Date de publication de la demande :
**08.03.89 Bulletin 89/10**

(45) Mention de la délivrance du brevet :
**08.05.91 Bulletin 91/19**

(84) Etats contractants désignés :
**AT BE CH DE FR GB IT LI LU NL SE**

(56) Documents cités :
**BE-A- 487 441**
**DE-A- 1 467 785**
**DE-A- 2 731 148**

(56) Documents cités :
**DE-A- 3 343 586**
**DE-A- 3 443 810**
**DE-B- 1 277 488**
**US-A- 4 326 954**

(73) Titulaire : **NIESSEN, Philippe**
**Paseo Garbi 129-131D**
**E-08860 Castelldefels (ES)**

(72) Inventeur : **NIESSEN, Philippe**
**Paseo Garbi 129-131D**
**E-08860 Castelldefels (ES)**

(74) Mandataire : **Dellicour, Paul**
**Office de Brevets E. Dellicour rue Fabry 18/012**
**B-4000 Liège (BE)**

Jouve, 18, rue Saint-Denis, 75001 PARIS

## Description

La présente invention est relative à un procédé de transfert capacitif d'une énergie électromagnétique à un liquide ou à des tissus biologiques par induction à travers une paroi, en matière métallique ou autre, dans le but de modifier certaines charges ioniques des particules en suspension ou en solution pour en modifier le comportement physique ou physico-chimique, sans qu'il y ait de contact avec la substance traitée ni de modification chimique de celle-ci.

Le procédé suivant l'invention a pour but entre autres de modifier la polarité de surface de la paroi intérieure d'un tuyau ou d'un réservoir contenant le liquide ou de pièces, métalliques ou non, plongées dans le liquide pour éviter, ralentir, stimuler ou contrôler le recouvrement uniforme et régulier par des sels incrustants.

Le procédé suivant l'invention a pour but de protéger les métaux de la corrosion par un revêtement uniforme d'une couche adhérente d'incrustations calcaires, par exemple, ledit procédé permettant un contrôle continu de l'ensemble du liquide présent, alors qu'antérieurement on se contentait d'un passage du liquide dans une chambre de traitement, forcément de taille mesurée et au débit limité, avec parfois des pertes de pression et toujours une perte d'efficacité à mesure qu'on s'éloigne de ladite chambre dans l'espace et dans le temps.

Pour adoucir l'eau ou la déminéraliser l'art antérieur utilisait soit la distillation, soit des moyens chimiques tels que les appareils à échangeurs d'ions, soit l'ajoute de polyphosphates, etc. On connaît les inconvénients de ces procédés, qui modifient chimiquement l'eau et la rendent parfois impropre à la consommation (non potable).

D'autre part, la quantité de sodium présente dans l'eau après traitement par échangeur d'ions rend celle-ci inadéquate pour des personnes soumises à un régime sans sel. De plus, la régénération périodique du système entraîne une pollution de l'environnement non négligeable et coûteuse pour l'utilisateur et pour la collectivité.

Parmi les appareils actuellement utilisés pour éviter les incrustations on peut distinguer :

– Les appareils utilisant des aimants permanents, tels que l'appareil décrit dans US-A-2 652 925, traitement consistant à faire passer les liquides dans le champ d'un ou de plusieurs aimants. Le fonctionnement de ces appareils dépend de l'état des aimants, qui sont fragiles et peuvent perdre leurs qualités en se recouvrant notamment de particules de fer, et le placement de ces appareils exige l'ouverture des tuyaux.

– Les appareils dits électriques ou électroniques, tels que l'appareil décrit dans DGBM-G 85 31521.4, composés d'une chambre de traitement contenant une anode et une cathode et dans laquelle passe l'eau à traiter. Ces appareils ne peuvent traiter qu'une quantité d'eau limitée par la capacité de la chambre de traitement. La détérioration de l'anode ou de la cathode provoque la diminution du rendement et une surveillance est donc nécessaire. Il faut impérativement ouvrir les canalisations pour placer l'appareil.

– Les appareils dits à ultrasons, tels que l'appareil de détartrage à ultrasons connu sous le nom de CRUSTEX, composés d'un générateur d'ultrasons et d'une sonde d'émission incorporée dans la conduite ou dans la chaudière et dont les vibrations sont censées empêcher ou détruire les incrustations existantes.

– Les appareils électroniques dits à induction constitués d'un générateur et de câble(s) enroulé(s) de part et d'autre autour du tuyau, tels que l'appareil décrit dans BE-A-901 884. La capacité de ces appareils est très limitée car ils ne créent qu'un champ très faible incontrôlable in-situ et ne conviennent absolument pas pour les débits constants ni pour les gros diamètres de tuyau. Les applications industrielles leurs sont donc impossibles ou très limitées.

Le procédé de transfert capacitif par induction suivant l'invention est caractérisé par l'emploi d'au moins deux circuits électriques séparés, un circuit primaire raccordé à générateur électronique fournissant les impulsions électriques réglables ou préréglées en forme, fréquence, amplitude et intensité, et un circuit secondaire constituant un circuit oscillant, dont la fréquence de résonnance est réglable et polarisable, et couvrant partiellement ou totalement l'extérieur des parois d'un tuyau, d'un réservoir ou d'une armature, le circuit primaire étant conçu pour épouser les mêmes formes que le circuit secondaire et le signal électrique dans le circuit secondaire étant induit par le circuit primaire.

Suivant l'invention le procédé est encore caractérisé par l'emploi de plusieurs circuits primaires, raccordés au même générateur réglable ou préréglé, permettant le couplage à plusieurs circuits secondaires, dont la fréquence de résonnance est réglable, amplifiable ou polarisable séparément par circuit au moyen de condensateurs fixes ou variables ou autre montage électrique ou électronique, tel que quartz, transistors ou diode.

D'autres caractéristiques de l'invention ressortiront de la description qui suit, basée sur le dessin annexé, à titre d'exemple uniquement, montrant en :

Figure 1 une vue schématique d'un appareillage suivant le procédé, lorsque le support du circuit secondaire est en matière conductrice, et

Figure 2 une vue analogue à celle de la figure 1 dans une variante de réalisation, lorsque le support du circuit secondaire est en matière non conductrice.

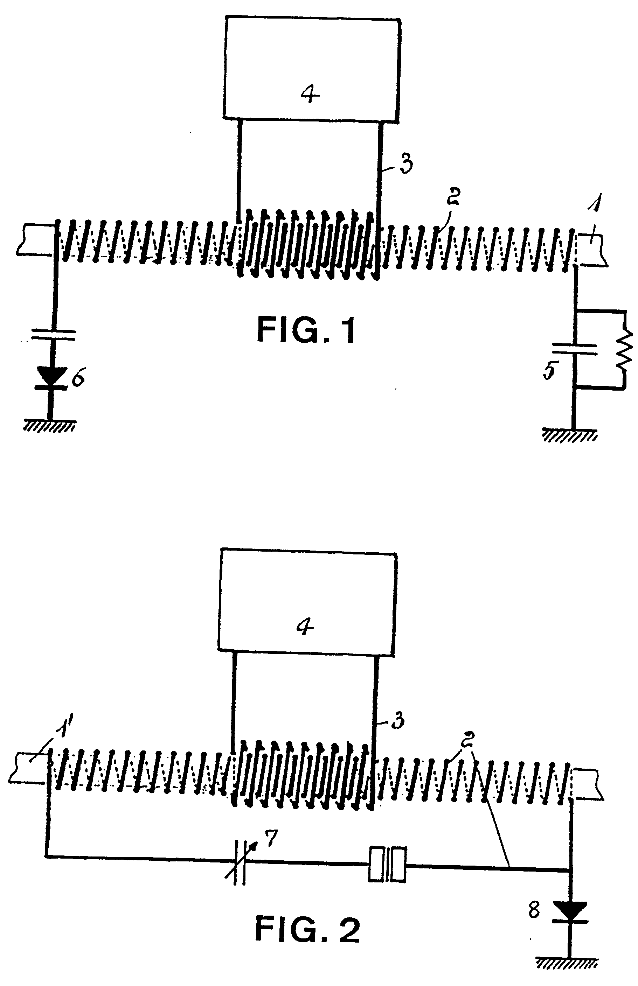

On a représenté en figure 1 un tuyau 1 en matière conductrice, à travers lequel doit se faire l'induction. Sur ce tuyau 1 est enroulé à spires jointives, sans chevauchement, un câble 2 conducteur d'électricité, souple et isolé ; cet enroulement 2 est qualifié de circuit secondaire.

Sur cet enroulement 2 est enroulé dans le même sens à spires jointives un autre câble 3, conducteur d'électricité, souple et isolé. Cet enroulement 3 est qualifié de circuit primaire, ses extrémités sont raccordées à un générateur 4, qui est un générateur d'impulsions électriques, polarisées ou non, réglables ou préréglées en fréquences, formes, amplitudes et intensités, comportant deux sorties (ou plus selon le nombre de circuits primaires 3) constituées par des bornes ou autre système de prises ou fiches permettant un bon contact électrique.

A une extrémité du câble électrique formant le circuit secondaire 2 est raccordée l'armature d'un condensateur fixe ou variable 5, dont l'autre armature est reliée à la terre (ou masse). Ce condensateur est destiné à accorder le circuit oscillant et peut être soit à valeur fixe, soit à valeur variable. Une résistance fixe ou variable (non représentée) peut y être connectée en parallèle pour compléter le système d'accord, ceci étant donné a titre indicatif et non limitatif.

A l'autre extrémité du câble électrique 2 est raccordé par une de ses armatures un autre condensateur fixe ou variable 6. Ce condensateur 6 est facultatif, le condensateur 5 suffisant fréquemment à accorder le circuit. En cas d'absence de ce condensateur 6, ladite extrémité du câble 2 est laissée libre et isolée ou encore, selon le cas, raccordée à la masse directement ou en y intercalant une diode destinée à la polarisation.

On voit en figure 2 que, lorsque le support 1' du circuit secondaire 2 est en matière non conductrice, par exemple un tuyau en PVC ou un réservoir en matière plastique, il est prévu suivant l'invention de raccorder ensemble les extrémités de l'enroulement secondaire 2. On peut y intercaler un condensateur 7 à valeur fixe ou variable, couplé ou non à une résistance fixe ou variable ; d'autre part, ce condensateur peut être remplacé par ladite résistance ou par tout autre système d'accord, tel que par exemple un quartz.

Selon Le résultat recherché est encore prévu (en 8) un raccordement facultatif à la terre (ou masse), directement ou en y intercalant ici aussi une diode destinée à la polarisation.

Le procédé suivant L'invention permet diverses applications, qui sont décrites ci-après, cette description n'étant bien entendu pas limitative.

Pour protéger une pièce métallique de la corrosion, on utilise de l'eau dure ou calcifiante traitée selon le procédé décrit. La pièce, métallique ou non conductrice mais revêtue d'un enduit conducteur, est plongée dans L'eau traitée et connectée à une source de courant continu au potentiel négatif par rapport aux parois du réservoir.

L'eau traitée par ce procédé permet, par exemple, le pré-traitement d'armatures métalliques destinées à être incorporées dans du béton mais exposées entretemps aux intempéries et ne pouvant pas ou seulement peu s'oxyder. Dans cet exemple, la liaison du béton et des armatures traitées est améliorée sans qu'il y ait usage de produits chimiques coûteux et parfois polluants pour L'environnement.

L'application du procédé décrit permet de contrôler la dimension et la forme de certains cristaux, par exemple le carbonate de calcium qui est dimorphe, et donc de les rendre aptes à être retenus par un filtre adéquat. Il en résulte que L'eau est adoucie de façon physique, exclusivement.

Une application du procédé selon l'invention permet la réalisation d'un appareillage destiné à combattre les instructions calcaires ou autres, par exemple de magnésium, non seulement dans les tuyaux ou les réservoirs mais également dans les appareils de chauffage et de réfrigération. Pour ce faire, on utilise un maximum de tuyaux revêtus de l'enroulement secondaire 2, en circuit ouvert ou fermé. Les réservoirs éventuellement nécessaires peuvent également porter sur leurs parois ce cuircuit secondaire 2, imprimé, incorporé ou y appliqué d'une autre manière.

Le but du circuit secondaire 2 est de revêtir un maximum de surface pour traiter par transfert capacitif l'ensemble du liquide. C'est le circuit primaire 3, raccordé au générateur 4, qui induira le signal électrique choisi, réglable ou préréglé, dans le circuit secondaire 2, qui peut être accordé et/ou polarisé. Le champ électrique et électromagnétique en résultant a la particularité de modifier les cinétiques d'incrustations en agissant sur le potentiel électrochimique des surfaces et donc de l'adhérence des dépôts de carbonate de calcium mais également influence les particules solides en suspension et en solution par modification des charges ioniques, modification provoquée par le champ électrique et électromagnétique induit.

Une mesure de la modification de la conductivité de l'eau pourra être faite, par comparaison – avant et après traitement – au moyen d'un conductimètre.

On voit donc que cette application du procédé décrit permet non seulement d'éviter les dépôts adhérant de carbonate de calcium au niveau des parois mais permet d'obtenir une eau non-incrustante par modification des charges ioniques influençant la germination et la précipitation des cristaux. Ni la potabilité de l'eau ni sa composition chimique ne seront changées.

Une application du procédé selon l'invention peut être destinée à l'amélioration des qualités des eaux minérales et autres boissons préparées à base de celles-ci.

On sait que les eaux minérales en bouteilles, lorsqu'elles arrivent sur la table, ont perdu certaines qualités qu'elles ont cependant lorsqu'on les consomme à la source.

Un appareillage réalisé pour appliquer le procédé décrit a un double avantage :

1) L'eau n'est plus incrustante, ce qui est d'après de nombreux auteurs un avantage certain pour la santé ;

2) La stimulation électromagnétique de l'eau a des effets biologiquement bénéfiques pour le consommateur, qui retrouvera ainsi une eau d'une qualité plus proche de celle qu'elle possédait à sa source.

Jusqu'à présent seuls des appareils à aimants permanents obligeant l'eau à passer dans leur champs, sont utilisés.

Ces appareils sont conçus soit pour être incorporés à la tuyauterie, soit pour être fixés au robinet d'eau courante ou encore à l'extrémité d'une sorte d'entonnoir, où serait versé le contenu de la bouteille d'eau minérale.

L'utilisation d'un appareillage selon le procédé permet de maintenir dans l'eau les sels minéraux nécessaires à la santé mais sans leurs inconvénients, tel que par exemple leur contribution néfaste à la formation de calculs biliaires (selon certains ouvrages médicaux). Un appareillage, conçu pour appliquer le procédé pourrait être un porte-bouteille, sorte de manchon inducteur avec poignée, contenant les circuits primaires et/ou secondaires et un générateur miniaturisé, avec son alimentation, incorporé ou non.

Des applications biologiques du procédé selon l'invention sont également utiles pour la préparation et la conservation de boissons fermentantes, notamment pour l'accélération du processus d'élaboration et vieillissement. Pour citer un exemple, les tonneaux destinés au stockage du vin en cave peuvent facilement recevoir un enroulement constituant un circuit secondaire selon l'invention, le circuit primaire restant mobile et le générateur pouvant facilement trouver place dans le berceau support du tonneau ou dans ses environs immédiats. L'induction de champs électromagnétiques et électriques semble être très prometteur dans ce domaine car l'effet induit est purement physique ou physico-chimique, sans inconvénients pour le vin dont il favorise un vieillissement harmonieux.

Le procédé suivant l'invention trouve aussi des applications en agriculture, telles que protection contre la maladie ou stimulation de la croissance des plantes. Le procédé consiste alors à concevoir le circuit primaire comme une sorte de treillis et à former chaque circuit secondaire (un par plante) d'une tige isolante supportant quelques boucles de fil conducteur isolé rigide mais malléable, le treillis isolé étant raccordé au générateur et les boucles d'un circuit secondaire étant disposées autour et à quelques centimètres de la plante.

A titre d'exemple d'un appareillage réalisé pour appliquer le procédé suivant l'invention est décrit ci-après un appareillage de traitement de L'eau pour obtenir un précipité colloïdal évitant la formation de dépôt incrustant.

L'homme de L'art fabriquera un générateur d'impulsions électriques de basse fréquence, par exemple de 4000 Hz, à signaux rectangulaires d'une amplitude de 50 Volts. La puissance, pour cet exemple simple, pourra être de 5 Watts.

Ce générateur 4 sera alimenté par le secteur électrique ou de toute autre manière et comportera deux bornes (entrée et sortie du signal) pour le raccordement au circuit primaire.

Les paramètres cités ci-dessus le sont à titre indicatif et pourront d'ailleurs être réglables (fréquence et amplitude, par exemple).

Pour la réalisation du circuit secondaire 2, sur un support 1 d'un diamètre de 3/4", par exemple, il utilisera environ vingt mètres de câble souple (section du conducteur 1 mm2) et isole, qu'il enroulera soigneusement à spires jointives, sans chevauchement, autour du tuyau 1 (galvanise, dans cet exemple). La longueur de ce câble peut être réduite ou augmentée sensiblement.

Chaque extrémité de cet enroulement 2 sera raccordée à un condensateur 5 lui-même relie à la terre.

Ce circuit 2 peut être polarise en y ajoutant une diode 6 (Fig. 1).

Le circuit primaire 3 sera constitue par un câble électrique pouvant avoir les mêmes caractéristiques que celui du circuit secondaire 2 mais beaucoup plus court (1/5e environ du précédent). L'enroulement se fera sur le précédent, à spires jointives, obligatoirement dans le même sens. Les deux extrémités seront reliées électriquement aux bornes d'entrée et de sortie du générateur 4.

Pour plus de facilité, le boîtier contenant le générateur 4 sera fixe près du tuyau 1 pour éviter les longueurs de câbles inutiles.

La forme du circuit secondaire 2 peut varier à l'infini.

Lorsqu'il s'agit de parois de réservoir, un circuit imprimé en surface peut être réalisé ou encore intégré dans sa matière, lorsqu'elle est isolante. Ce circuit peut même, en même temps, servir d'armature au réservoir ou aux conduites, s'il est par exemple constitué de fils ou de tiges ou de plaques d'acier.

La séparation mécanique et électrique des circuits secondaire 2 et primaire 3 rend très facile la conception et la manipulation de divers conteneurs équipés selon ce procédé.

Le circuit primaire 3 sera toujours conçu pour épouser les formes du circuit secondaire 2, afin d'obtenir une induction (couplage) adéquate.

On pourra contrôler l'accord du circuit secondaire 2 au moyen, par exemple, d'un oscilloscope ou au moyen d'un petit récepteur adapté à la fréquence pour la rendre audible.

Parmi les mesures pouvant être faites pour vérifier le bon fonctionnement du système on retiendra entre autres :

    1. Le contrôle visuel de la forme des cristaux (microscope électronique) ;

    2. Mesure de la turbicité de l'eau ;

    3. Mesure de la conductivité de l'eau au moyen d'un conductimètre ;

    4. Dureté et adhérence des dépôts et/ou des incrustations.

## Revendications

1. Procédé de transfert capacitif d'une énergie électromagnétique à un liquide ou à des tissus biologiques par induction à travers une paroi en matière métallique ou autre, caractérisé par l'emploi d'au moins deux circuits électriques séparés, un circuit primaire (3) raccordé à un générateur électronique (4) fournissant les impulsions électriques réglables ou préréglées en forme, fréquence, amplitude et intensité, et un circuit secondaire (2) constituant un circuit oscillant, dont la fréquence de résonnance est réglable et polarisable, et couvrant partiellement ou totalement l'extérieur des parois d'un tuyau, d'un réservoir ou d'une armature, le circuit primaire (3) étant conçu pour épouser les mêmes formes que le circuit secondaire (2) et le signal électrique dans le circuit secondaire étant induit par le circuit primaire.

2. Procédé de transfert capacitif suivant la revendications 1, caractérisé par l'emploi de plusieurs circuits primaires (3), raccordés au même générateur (4) réglable ou préréglé, permettant le couplage à plusieurs circuits secondaires (2), dont la fréquence de résonnance est réglable, amplifiable ou polarisable séparément par circuit au moyen de condensateurs (4 et/ou 5) fixes ou variables ou autre montage électrique ou électronique, tel que quartz, transistors ou diode.

3. Procédé de transfert capacitif suivant les revendications 1 et 2, caractérisé en ce qu'il consiste à revêtir partiellement ou totalement les conduites contenant le liquide à traiter d'un ou de plusieurs enroulements de câbles électriques formant le ou les circuits secondaires.

4. Procédé de transfert capacitif suivant les revendications 1 et 2, caractérisé en ce qu'il consiste à revêtir partiellement ou totalement les parois de réservoirs ou de conteneurs d'enroulements ou de circuits imprimés formant le ou les circuits secondaires.

5. Procédé de transfert capacitif suivant une ou plusieurs des revendications 1 à 4, caractérisé en ce qu'il consiste à incorporer dans les parois du tuyau, du réservoir ou du conteneur le ou les circuits secondaires isolés électriquement pour constituer L'armature métallique.

6. Procédé de transfert capacitif suivant une ou plusieurs des revendications 1 à 5, appliqué à l'obtention d'une eau adoucie par abaissement du TH (dureté totale), caractérisé en ce qu'il consiste par incorporation d'un ou plusieurs filtres, en parallèle ou en série, dans la conduite à retenir après un filtrage adéquat un grand nombre de cristaux de carbonates de calcium et autres, dont la formation a été influencee au passage du liquide dans le champ formé par le circuit secondaire.

7. Procédé de transfert capacitif suivant une ou plusieurs des revendications 1 à 5, appliqué au revêtement d'une ou plusieurs couches régulières de carbonates de calcium et autres sur toute pièce métallique ou non métallique rendue conductrice par l'application en surface d'un enduit spécial, caractérisé en ce qu'il consiste à plonger ou à mettre en contact ladite pièce dans ou avec une eau traitée rendue calcifiante et incrustante, ladite pièce étant connectée à une source de courant continu au potentiel négatif par rapport au milieu ambiant (parois de réservoir, robinet, etc.).

8. Procédé de transfert capacitif suivant une ou plusieurs des revendications 1 à 5, dans une application destinée à combattre les incrustations communément appelées tartre dans les tuyaux, chaudières, réservoirs ou systèmes de réfrigération et d'alimentation en eau à usage domestique ou industriel, caractérisé en ce qu'il consiste dans un réglage d'accord du circuit secondaire et dans sa polarisation améliorant les performances pour réaliser un assainissement par déstabilisation du tartre existant, le générateur étant réglé de manière optimale selon la teneur en sels et le débit de l'eau à traiter pour constituer une protection contre l'entartrage.

9. Procédé de transfert capacitif suivant une ou plusieurs des revendications 1 à 5, appliqué à l'amélioration des qualités biologiques du contenu de bouteilles, caractérisé en ce qu'il consiste à incorporer le générateur et le circuit primaire dans un support destiné à recevoir une ou plusieurs bouteilles, et à entourer la ou lesdites bouteilles d'un ou plusieurs circuits secondaires formant manchon, avec ou sans poignées.

10. Procédé de transfert capacitif suivant une ou plusieurs des revendications 1 à 5, appliqué à l'accélération du processus d'élaboration et de vieillissement de boissons fermentantes, caractérisé en ce qu'il consiste à enrober un conteneur de préparation ou de stockage desdites boissons d'un circuit secondaire.

11. Procédé de transfert capacitif suivant une ou plusieurs des revendications 1 à 5, pour des applications en agriculture telles que protection contre la maladie ou stimulation de la croissance des plantes, caractérisé en ce qu'il consiste à concevoir le circuit primaire comme une sorte de treillis et à former chaque circuit secondaire (un par plante) d'une tige isolante supportant quelques boucles de fil conducteur isolé rigide mais malléable, le treillis isolé étant raccordé au générateur et les boucles d'un circuit secondaire étant disposées autour et à quelques centimètres de la plante.

## Claims

1. A process for the capacitive transfer of an electro-magnetic energy to a liquid or to biological tissues by induction through a wall of metal or other material, characterized in the use of at least two separate electric circuits, a primary circuit (3) connected to an electronic generator (4) supplying the electric pulses which are regulable or preset as to shape, frequency, amplitude and intensity, and a secondary circuit (2) constituting an oscillating circuit the resonance frequency of which is regulable and polarizable, and covering partly or wholly the outside of the walls of a pipe, a tank or a reinforcement, the primary circuit (3) being designed to take the exact shapes of the secondary circuit (2), and the electric signal in the secondary circuit being induced by the primary circuit.

2. A process for capacitive transfer according to claim 1, characterized in the utilization of several primary circuits (3) connected to the same regulable or preset generator (4) permitting coupling to several secondary circuits (2), the resonance frequency of which is regulable, amplifiable or polarizable separately by a circuit by means of capacitors (4 and/or 5), fixed or variable, or any other electric or electronic assembly, such as quartz, transistors or diode.

3. A process for capacitive transfer according to claims 1 and 2, characterized in that it consists in coating partly or wholly the ducts containing the liquid to be treated with one or more electric cable windings forming the secondary circuit(s),

4. A process for capacitive transfer according to claims 1 and 2, characterised in that it consists in coating partly or wholly the walls of tanks or containers with windings or printed circuits constituting the secondary circuit(s).

5. A process for capacitive transfer according to one or more of claims 1 to 4, characterised in that it consists in incorporating into the walls of the pipe, tank or container the electrically insulated secondary circuit(s) to constitute the metal reinforcement.

6. A process for capacitive transfer according to one or more of claims 1 to 5, applied to the obtaining of a water softened by reducing the TH (total hardness), characterised in that it consists, by means of the incorporation of one or more filters, arranged in parallel or in series in the pipe, in retaining after appropriate filtration a high number of crystals of calcium carbonate and other products, the formation of which was influenced as the liquid passed through the field formed by the secondary circuit.

7. A process for capacitive transfer according to one or more of claims 1 to 5, applied to the coating of one or more even layers of calcium carbonate and other products on any metal or non-metallic part made electrically conductive by the application on its surface of a special coating, characterised in that it consists in immersing or contacting said part in or with a treated water made calcifying and incrusting, said part being connected to a supply of direct current with potential negative with respect to the surrounding medium (tank walls, tap, etc.).

8. A process for capacitive transfer according to one or more of claims 1 to 5, in an application intended to combat incrustations, normally termed scale or fur, in pipes, boilers, tanks or systems for cooling and supplying water for domestic or industrial purposes, characterised in that it consists in a tuning of the secondary circuit and in its polarization-improving performance for carrying out a purification by destabilization of the existing scale, the generator being controlled in optimum manner depending on the salt content and the rate of flow of the water to be treated to constitute a protection against scaling,

9. A process for capacitive transfer according to one or more of claims 1 to 5, applied to the improvement of the biological properties of the contents of bottles, characterised in that it consists in incorporating the generator and the primary circuit into a support intended to receive one or more bottles, and in surrounding said bottle(s) with one or more secondary circuits constituting a sleeve, with or without handles,

10. A process for capacitive transfer according to one or more of claims 1 to 5, applied to the speeding up of the process of preparation and ageing of fermented beverages, characterised in that it consists in embedding a container for the making or storage of said beverages with a secondary circuit.

11. A process for capacitive transfer according to one or more of claims 1 to 5, for agricultural applications such as protection against diseases or stimulation of the growth of plants, characterised in that it consists in designing the primary circuit as a kind of grating and in making each secondary circuit (one for each plant) as an insulating rod supporting some loops of conductor wire, insulated, rigid but malleable, the insulated grating being connected to the generator and the loops of a secondary circuit being disposed around, and a few centimetres away, from the plant.

## Ansprüche

1. Verfahren zur kapazitiven Übertragung elektromagnetischer Energie auf eine Flüssigkeit oder auf biologische Gewebe durch Induktion quer durch eine Wand aus Metall oder einem anderen Material, **gekennzeichnet** durch die Verwendung von mindestens zwei getrennten elektrischen Stromkreisen, eines Primärstromkreises (3), der an einen elektrischen Generator (4) angeschlossen ist, der die in Form, Frequenz, Amplitude und Intensität einstellbaren oder voreinstellbaren elektrischen Impulse liefert und eines einen Schwingkreis darstellenden Sekundärstromkreises (2), dessen Resonanzfrequenz einstellbar und polarisierbar ist und der teilweise oder ganz die Außenwand eines Rohres, eines Behälters oder einer Armatur bedeckt, wobei der Primärstromkreis (3) so entwickelt ist, daß er an den Sekundärstromkreis (2) angepaßt ist und daß das elektrische Signal in dem Sekundärstromkreis durch den Primärstromkreis induziert wird.

2. Verfahren zur kapazitiven Übertragung nach Anspruch 1, **gekennzeichnet** durch die Verwendung von mehreren Primärstromkreisen (3), die an den gleichen einstellbaren oder voreinstellbaren Generator (4) angeschlossen sind, was die Kopplung an zahlreiche Sekundärstromkreise (2) ermöglicht, deren Resonanzfrequenz einstellbar, verstärkbar oder polarisierbar getrennt durch den Stromkreis ermöglicht wird mittels fester oder variabler Kondensatoren (4 und/oder 5) oder einer anderen elektrischen oder elektronischen Anordnung, wie Quarz, Transistoren oder Diode.

3. Verfahren zur kapazitiven Übertragung nach Anspruch 1 und 2, **dadurch gekennzeichnet**, daß die die zu behandelnde Flüssigkeit enthaltenden Rohrleitungen teilweise oder ganz mit einer oder mehreren Wicklungen von elektrischen Kabeln, die den oder die Sekundärstromkreise bilden, verkleidet sind.

4. Verfahren zur kapazitiven Übertragung nach Anspruch 1 und 2, **dadurch gekennzeichnet**, daß die Wände der Behälter oder der Gehäuse teilweise oder ganz mit Wicklungen oder gedruckten Schaltungen verleidet sind, die den oder die zweiten Stromkreise bilden.

5. Verfahren zur kapazitiven Übertragung nach einem oder mehreren der Ansprüche 1 bis 4, **dadurch gekennzeichnet**, daß in die Wände des Rohres, des Gehäuses, oder des Behälters ein oder mehrere Sekundärstromkreise elektrisch isoliert eingebettet sind, um die Metallarmatur zu bilden.

6. Verfahren zur kapazitiven Übertragung nach einem oder mehreren der Ansprüche 1 bis 5, das angewandt wird, um enthärtetes Wasser durch Senkung des TH (Gesamthärte) zu erlangen, **dadurch gekennzeichnet**, daß durch Einbau eines oder mehrerer Filter, parallel oder in Reihe, in die Leitung, nach einer angemessenen Filterung eine große Anzahl von Kalziumkarbonatkristallen und anderen zurückbehalten wird, deren Bildung beim Durchgang der Flüssigkeit durch das durch den Sekundärstromkreis gebildete Feld beeinflußt wird.

7. Verfahren zur kapazitiven Übertragung nach einem oder mehreren der Ansprüche 1 bis 5, das angewandt wird auf den Überzug aus einer oder mehreren gleichmäßigen Lagen von Kalziumkarbonat und anderen, auf einem ganzen metallischen oder nichtmetallischen Teil, das durch die Anbringung einer Spezialschicht auf der Oberfläche leitend gemacht wird, **dadurch gekennzeichnet**, daß das besagte Teil in Wasser getaucht oder damit in Berührung gebracht wird, das durch Behandlung verkalkt oder inkrustiert wurde, wobei das besagte Teil mit einer Gleichstromquelle mit negativem Potential in Bezug auf das Umgebungsmilieu (Wände des Behälters, Hahn, usw.) verbunden ist.

8. Verfahren zur kapazitiven Übertragung nach einem oder mehreren der Ansprüche 1 bis 5, in einer Anwendung die dazu bestimmt ist, die Verkrustungen, gewöhnlich Kesselstein genannt, in den Rohren, Kesseln, Behältern oder Systemen zur Kühlung und Zuführung von Wasser für Haus und industriellen Verbrauch zu bekämpfen, **dadurch gekennzeichnet**, daß es aus einer Abstimmungsregelung des Sekundärstromkreises besteht und in seiner die Leistung verbessernden Polarisation, um durch Destabilisierung des vorhandenen Kesselsteins eine Reinigung zu erzielen und daß der Generator entsprechend dem Gehalt an Salzen und der Durchflußleistung des zu behandelnden Wassers optimal geregelt wird, um einen Schutz gegen die Kesselsteinablagerung zu bilden.

9. Verfahren zur kapazitiven Übertragung nach einem oder mehreren der Ansprüche 1 bis 5, angewendet zur Verbesserung der biologischen Qualität des Inhaltes von Flaschen, **dadurch gekennzeichnet**, daß der Generator und der Primärstromkreis in einer Stütze oder Auflage einbebaut werden, die dazu bestimmt ist, eine oder mehrere Flaschen aufzunehmen und daß die besage Flasche oder die besagten Flaschen mit einem oder mehreren Sekundärstromkreisen die eine Muffe bilden, mit oder ohne Griff, umgeben werden.

10. Verfahren zur kapazitiven Übertragung nach einem oder mehreren der Ansprüche 1 bis 5, angewendet zur Beschleunigung des Bearbeitungs- und Alterungsprozesses von gärenden Getränken, **dadurch gekennzeichnet**, daß ein Vorbereitungs- oder Lagerungsbehälter für die besagten Getränke mit einem Sekundärstromkreis umhüllt wird

11. Verfahren zur kapazitiven Übertragung nach einem oder mehreren der Ansprüche 1 bis 5, für Anwendungen in der Landwirtschaft wie zum Schutz gegen Krankheiten oder zur Stimulierung des Pflanzenwachstums, **dadurch gekennzeichnet**, daß der Primärstromkreis als eine Art von Gitter entwickelt wird und daß jeder Sekundärstromkreis (einer pro Pflanze) aus einer isolierenden Stange geformt wird, die einige Schleifen aus leitendem, isolierten, starren aber streckbaren Draht träg und daß das isolierte Gitter an einen Generator angeschlossen ist und daß die Schleifen eines Sekundärstromkreises um die Planze und mit einigen Zentimetern Abstand davon angeordnet sind.

**FIG. 1**

**FIG. 2**